(19) Europäisches Patentamt
European Patent Office
Office européen des brevets

(11) **EP 2 246 993 A1**

(12) **EUROPEAN PATENT APPLICATION**

(43) Date of publication:
**03.11.2010 Bulletin 2010/44**

(51) Int Cl.:
***H04B 7/04*** (2006.01)

(21) Application number: **09290308.7**

(22) Date of filing: **27.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Alcatel Lucent**
**75008 Paris (FR)**

(72) Inventors:
• **Wild, Thorsten**
**70435 Stuttgart (DE)**

• **Ohm, Michael**
**70372 Stuttgart (DE)**
• **Schönerstedt, Lutz**
**71634 Ludwigsburg (DE)**

(74) Representative: **Kohler Schmid Möbus**
**Patentanwälte**
**Ruppmannstraße 27**
**70565 Stuttgart (DE)**

Remarks:
Amended claims in accordance with Rule 137(2) EPC.

(54) **Extending SDMA by power loading for spatially non-separable users**

(57)     The invention relates to a method for performing downstream transmissions in a wireless communications network (1), the method comprising: selecting at least a first and a second mobile station (MS1, MS2) in at least one of a plurality of beams ($B_1^{(j)}$ to $B_4^{(j)}$) of a communications cell ($B_j$) using space-division multiple access, SDMA, the first mobile station (MS1) having higher Signal to Interference and Noise Ratio, SINR, than the second mobile station (MS2), generating a downstream signal ($b_1^{(j)}$) by combining a first data signal ($d_1^{(j)}$) for the first mobile station (MS1) with a second data signal ($d2^{(j)}$) for the second mobile station (MS2) using non-zero amplitude scaling factors ($f_{1,1}^{(j)}$, $f2,1^{(j)}$), transmitting the downstream signal ($b_1^{(j)}$) from a base station ($BS_j$) of the communications cell ($B_j$) to the first and second mobile stations (MS1, MS2), in the first mobile station (MS1), before recovering the first data signal ($d_1^{(j)}$) from the transmitted downstream signal, removing the contribution of the second data signal ($d_2^{(j)}$) from the transmitted downstream signal, preferably by using non-linear interference cancellation, and in the second mobile station (MS2), recovering the second data signal ($d_2^{(j)}$) from the transmitted downstream signal treating the contribution of the first data signal ($d_1^{(j)}$) as noise. The invention also relates to a communications cell ($B_j$) as well as to a communications network.

Fig. 1

EP 2 246 993 A1

**Description**

<u>Background of the Invention</u>

The invention relates to a method for performing downstream transmissions in a wireless communications network, to a computer program product for implementing the method, to a communications cell for a wireless communications network, and to a wireless communications network.

In wireless mobile communication systems, a multi-antenna downlink with multiuser Multiple-Input/Multiple Output (MU-MIMO) techniques for space division multiple access (SDMA) is of advantage. SDMA allows near-orthogonal spatial resources in the same (time-/frequency-/code-) resource, depending on the multiple access system. This can e.g. realized by fixed beams and ensuring a certain inter-beam distance, or by direction-based beamforming with a certain angular separation of users.

However, due to the number of transmit antennas and the spatial separation there is a natural limitation of (time-/frequency-/code-) resource re-usage in the spatial domain by SDMA. Moreover, mutual cross-talk limits the achievable rate due to intra-cell interference.

<u>Summary of the Invention</u>

According to one aspect, a method for performing downstream transmissions in a wireless communications network is provided, the method comprising: selecting at least a first and a second mobile station in at least one of a plurality of beams of a communications cell using space-division multiple access, SDMA, the first mobile station having higher Signal to Interference and Noise Ratio, SINR, than the second mobile station, generating a downstream signal by combining a first data signal for the first mobile station with a second data signal for the second mobile station using non-zero amplitude scaling factors, transmitting the downstream signal from a base station of the communications cell to the first and second mobile stations, in the first mobile station, before recovering the first data signal from the transmitted downstream signal, removing the contribution of the second data signal from the transmitted downstream signal, preferably by using non-linear interference cancellation, and in the second mobile station, recovering the second data signal from the transmitted downstream signal treating the contribution of the first data signal as noise.

Preferred embodiments overcome at least some of the limitations of SDMA resource usage.

The inventors propose to reuse a single SDMA (+TDMA/DMA/CDMA) resource - for example a beam - multiple times, e.g. twice, thus improving the throughput of the mobile communication system. As described above, the re-use of a SDMA resource can be done by pairing two users (mobiles) with very different path loss conditions and using a power loading for each of the paired transmit signals. As the mobile stations are usually equipped with non-linear receivers, e.g. using interference cancellation, the mobile station with the weaker SINR gets a much larger portion of the total transmit power than the mobile station with the stronger SINR.

Consequently, decoding can be done as follows: The low-SINR mobile station treats the weak transceiver signal for the high-SINR mobile as noise and thus ignores it. The high-SINR mobile station first decodes the signal intended for the low-SINR mobile and subtracts it from the sum transceiver signal. For the subtraction, the signal is weighted by the estimated channel. Afterwards, the high-SINR mobile station is able to decode its own signal from the remaining signal. The additional multiple access dimension on top of a SDMA resource can also be called RDMA (range division multiple access).

In a pure SDMA system the inventive concept can be used as an add-on in the following way: Find users which are (nearly) spatially non-separable with strongly different SINR conditions. Pair them together. Whenever the low SINR mobile of an existing pair is scheduled, check whether there are still reserves for additional RDMA regarding SINR for it available. This means that the mobile station can still be served with a satisfying rate even when it gives away a small portion of its transmit power to its high SINR partner, resulting in an additional intra-cell interference for the low-SINR mobile. If this is still acceptable then the high SINR partner of the low SINR mobile is served on the same SDMA resource, e.g. with the same transmit antenna weights.

In one variant, the method further comprises: selecting the amplitude scaling factors of all the beams of the communications cell such that at least one target transmission characteristic (target metric) of the communications cell, in particular a weighted sum rate, a total transmit power, or a maximum cell throughput, is optimized. The power balancing between all SDMA+RDMA users involved can be balanced in order to maximize the weighted sum rate. For proportional fairness e.g. the weights can be chosen as one over the average expected estimated rate. For details relating this matter, see the article "Optimum power allocation for the MIMO-BC zero-forcing precoder with per-antenna power constraints", Boccardi, F., Huang, H., Proceedings of Information Sciences and Systems, 2006 40th Annual Conference on, March 2006. Alternatively or in addition, power loading between different SDMA and RDMA resources may also be performed in order to optimize e.g. the resulting throughput. In any case, in addition to the RDMA user pairing and power allocation per user within a beam, now the power allocation per user is treated across all beams. This means that in the optimization of the target metric not only the intra-cell intra-beam interference is taken into account, but also the intra-cell inter-beam interference is considered.

In a further variant, the method further comprises: generating a common pre-coding vector for the data signals of the selected mobile stations by combining a pre-coding vector of the first mobile station with a pre-coding vector of the second mobile station. In this case, the communications cell uses adaptive beams instead of fixed beams, i.e. each user is allowed to use an individual pre-coding vector. The inventors propose using the same weights for paired RDMA users. This gives the following advantages: Dedicated pilot resources (required for channel estimation and equalization) can be re-used for all paired RDMA users, which reduces the required pilot overhead, and the consumption of the resource 'space' can be reduced, i.e. more SDMA resources will be available for other users.

In yet another variant the difference between the SINR of the first selected mobile station and the SINR of the second selected mobile station is chosen to be larger than a threshold parameter. In the step of selecting a first and a second mobile station for the pairing, only mobile stations are paired which have a SINR difference which is above a certain threshold parameter. The threshold parameter ($\Delta$SINR) can be determined e.g. by mapping the SINR to a parameter indicative of a transmission characteristic of the communications cell, e.g. the weighted sum rate. For example, the pairing between two mobile stations may only be performed when the average weighted sum rate of the two individual mobile stations is smaller than the sum of the weighted sum rates of each of the paired mobiles, as will be described in further detail below.

In one variant, the method further comprises: selecting a third mobile station in a further beam of a further communications cell (e.g. from a neighbor sector or neighbor site) also serving the second mobile station, the third mobile station having higher SINR than the second mobile station, generating a further downstream signal for the second mobile station by combining the second data signal for the second mobile station with a third data signal for the third mobile station, and transmitting the downstream signal and the further downstream signal to the second mobile station using an open-loop or a closed-loop diversity scheme, preferably orthogonal block encoding, in particular space-frequency block encoding or space-time block encoding. It will be understood that alternatively, any other open-loop or closed-loop diversity scheme - like e.g. cyclic delay diversity - may replace orthogonal block encoding. In this case, multi-site processing is performed, i.e. the low SINR mobile of the RDMA pair is served from two different communications cells with distributed space-time/frequency-block-coding (STBC/SFBC) to improve its SINR. In contrast thereto, the high SINR RDMA partners do not use STBC/SFBC and are served from their own communications cell only.

A further aspect is implemented in a communications cell for a wireless communications network, comprising a base station adapted to use space division multiple access, SDMA, and a plurality of mobile stations, the base station comprising: a selection unit for selecting at least a first and a second mobile station in at least one of a plurality of beams of the communications cell, the first mobile station having higher Signal to Interference and Noise Ratio, SINR, than the second mobile station, a signal generation unit for generating a downstream signal by combining a first data signal for the first mobile station with a second data signal for the second mobile station using non-zero amplitude scaling factors, and a transmission unit for transmitting the downstream signal from the base station to the first and second mobile stations, wherein the first mobile station is adapted, before recovering the first data signal from the transmitted downstream signal, to remove the contribution of the second data signal from the transmitted downstream signal, preferably by using non-linear interference cancellation, and wherein the second mobile station is adapted to recover the second data signal from the transmitted downstream signal treating the contribution of the first data signal as noise.

The communications cell is adapted to perform SDMA, i.e. to re-use the same time-frequency resources with different beams (=precoding vectors) at the same time. Within each resource / beam, two or more different mobile stations may be served. In particular, in one multiple access resource one may have a first and second mobile station served in beam j, a third and fourth mobile station served in beam k, a fifth and sixth mobile station served in beam l, etc.

In one embodiment, the signal generation unit is adapted for selecting the amplitude scaling factors of the downstream signals of all the beams of the communications cell such that at least one target transmission characteristic of the communications cell, in particular a weighted sum rate, a total transmit power, or a maximum cell throughput, is optimized. The scheduling and amplitude scaling task for the optimization is as follows: Choose the amplitude scaling factors for all beams in such a way that some metric is optimized; take into account the nonlinear MS (mobile stations') receivers with interference cancellation for RDMA user pairing; and allow and perform power loading per beam.

The metric for optimization may for example be the weighted sum rate, which needs to be maximized. An alternative metric is the total transmit power under the constraint of some guaranteed bit rate for the mobile stations. The total transmit power needs to be minimized. Another alternative metric is the maximum cell sum throughput with the constraint of some guaranteed minimum (cell-edge) MS bit rate. This metric needs to be maximized. It will be understood that also a combined metric may be optimized, the combined metric being a function of two or more of the parameters described above.

In a further embodiment, the signal generation unit is adapted to generate a common pre-coding vector for the data signals of the selected mobile stations by combining a pre-coding vector of the first mobile station with a pre-coding vector of the second mobile station. For generating the pre-coding vectors, there exists a multitude of different adaptive beamforming algorithms, e.g. direction-based beamforming, Eigenbeamforming etc.

In another embodiment, the selection unit is adapted to select a first mobile station and a second mobile station having a difference of the SINR which is larger than a threshold parameter. It will be understood that alternatively or in addition, a priority of the mobile stations may be taken into consideration as a condition for the pairing. For example, if the first / second mobile station has a higher priority than the second / first mobile station, the pairing may only be performed when the rate of the first / second mobile station with the pairing is at least two times the rate of the first / second mobile station without the pairing.

Another aspect is implemented in a wireless communications network comprising a communications cell as described above and at least one further communications cell as described above. When two beams of the communications cells overlap, a mobile station in the overlap region may be served by both communications cells e.g. with distributed Space-Time or Space-Frequency Block Encoding.

In one embodiment of the communications network, a base station of the further communications cell comprises: a selection unit adapted for selecting a third mobile station in a beam of the further communications cell also serving the second mobile station, the third mobile station having higher SINR than the second mobile station, a generation unit adapted to generate a further downstream signal by combining the second data signal for the second mobile station with a third data signal for the third mobile station, and a transmitting unit for transmitting the further downstream signal to the second and third mobile stations, wherein an open-loop or a closed-loop diversity scheme, preferably orthogonal block encoding, in particular space-frequency block encoding or space-time block encoding is used for transmitting the downstream signal and the further downstream signal to the second mobile station. Alternatively, any other open-loop or closed-loop diversity scheme - like e.g. cyclic delay diversity - may replace the orthogonal block encoding. In the way described above, multi-site processing can be performed for enhancing the overall performance, in particular the throughput, of the communications network.

A final aspect of the invention is implemented in a computer program product comprising code means adapted to perform all the steps of the method as described above. The computer program product may be implemented in a suitable software or hardware, in particular a field programmable gate array (FPGA) or an application-specific integrated circuit (ASIC). In particular, the computer program may be a distributed code being implemented on different physical entities such as base stations and mobile stations of a communications network.

Further features and advantages are stated in the following description of exemplary embodiments, with reference to the figures of the drawing, which shows significant details, and are defined by the claims. The individual features can be implemented individually by themselves, or several of them can be implemented in any desired combination.

Brief Description of the Drawings

Exemplary embodiments are shown in the diagrammatic drawing and are explained in the description below. The following are shown:

Fig. 1    shows a schematic diagram of an embodiment of a communications cell according to the invention, and

Fig. 2    shows a schematic diagram of a communications network comprising two communications cells of the type shown in Fig. 1.

Detailed Description of Preferred Embodiments

In the following, two different scenarios ( I.) and II.)) will be described, the first one being related to a single communications cell, the second one to multiple (two) communications cells, the first scenario being considered with fixed and adaptive beams, the second one only with fixed beams (for the sake of simplicity).

**I) Single-cell solution for SDMA + RDMA**

Fixed Beams

Within each cell $j$, $j=1,...,N_c$, a grid of $N_B$ fixed beams serving as SDMA resources can be formed. For the following calculations, the beams will be labeled $B_i^{(j)}$, $i=1,..., N_B$. A number $N_u^{(j)}$ of mobile stations (MS) is associated with cell $j$. These MS are labeled MS$m$, with $m \in S^{(j)} = \{1,\ldots,N_u^{(j)}\}$. (The set $S^{(j)}$ contains all indices of MS associated with cell *j*.) All mobile stations are further associated with one of the beams $B_i^{(j)}$, $i = 1, \ldots, N_B$. The set $S_i^{(j)}$

contains all indices of MS associated with beam $B_i^{(j)}$. Obviously, the sets $S_i^{(j)}$, $i = 1, \ldots, N_B$, are each subsets of the set $S^{(j)}$. Further, all these sets are disjunct, i.e. $S_p^{(j)} \cap S_q^{(j)} = \{\}$, $p,q = 1, \ldots, N_B$, $p \neq q$. It will be understood that there are also the 'classical' multiple access dimensions time, frequency and code, providing a set of orthogonal multiple access resources and that in each one of these resources, the decision on beams and pairings can be different.

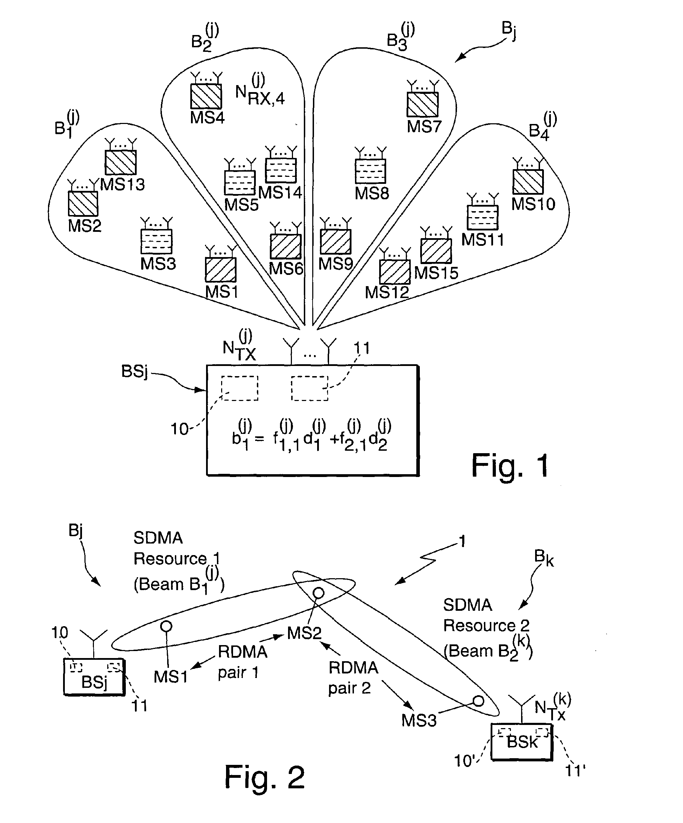

**Fig. 1** shows an example of a communications cell $B_j$ with four beams $B_1^{(j)}$, $B_2^{(j)}$, $B_3^{(j)}$, **and** $B_4^{(j)}$

generated by a base station BS$_j$ having a plurality of transmit antennas $N_{\mathrm{Tx}}^{(j)}$ serving as a transmitting unit. There are overall fifteen mobile stations MS1 to MS15 in communications cell *j*. For the index sets in this example we have

$$S_1^{(j)} = \{1,2,3,13\}, \quad S_1^{(j)} = \{4,5,6,14\}, \quad S_1^{(j)} = \{7,8,9\}, \quad \text{and} \quad S_1^{(j)} = \{10,11,12,15\}.$$

The transmit signal vector **x** with the grid of fixed beams is obtained by multiplying the precoding matrix **P** =

[$\mathbf{p}_1$ $\mathbf{p}_2$ ... $\mathbf{p}_{N_B}$] to the vector of sum transmit signals per beam $\mathbf{b}^{(j)} = \begin{bmatrix} b_1^{(j)} & b_2^{(j)} & \ldots & b_{N_B}^{(j)} \end{bmatrix}^{\mathrm{T}}$ with the sum transmit signal on beam $B_i^{(j)}$ being $b_i^{(j)} = \sum_{v \in S_i^{(j)}} f_{v,i}^{(j)} d_v^{(j)}$. $d_v^{(j)}$ denotes the data signal for one individual user $v$, and

$f_{v,i}^{(j)}$ are real-valued amplitude scaling factors. The matrix **P** is made up of $N_B$ column vectors $\mathbf{p}_\kappa$, $\kappa = 1, \ldots, N_B$, with the number of elements equal to the number of transmit antennas $N_{\mathrm{Tx}}^{(j)}$ in cell *j*. For the $N_{\mathrm{Tx}}^{(j)}$ - element transmit signal vector we thus have **x** = **P**·b.

On each of the beams $B_1^{(j)}$, $B_2^{(j)}$, $B_3^{(j)}$, **and** $B_4^{(j)}$, a RDMA pairing of mobile stations can be performed. This means that two mobile stations with (very) different path loss conditions are paired and a power loading for each of the paired transmit signals is used. In the example shown in Fig. 1, the mobile stations MS1 to MS15 are attributed to three different groups according to their SINR. A first group comprises only low-SINR mobile stations, in the present example MS1, MS6, MS9, MS12, and MS15. A second group comprises MS3, MS5, MS14, MS8, MS11 as medium-SINR mobile stations, and a third group comprises only high-SINR mobile stations MS2, MS4, MS7, MS13, MS10.

In each of the beams B$_1$$^{(j)}$ to B$_4$$^{(j)}$, a low-SINR mobile station can be paired with a high-SINR mobile station, as the difference of their respective SINR values is above a threshold parameter ASINR. Thus, medium-SINR mobile stations cannot be paired with other mobile stations within the same beam B$_1$$^{(j)}$ to B$_4$$^{(j)}$.

For fixing the threshold parameter ASINR for the pairing in a selection unit 10 of the base station BS$_j$, a number of different possibilities exist. For example, in a first step, the dependence of the remaining SINR after the pairing may be determined as a function f1, f2 of the SINR of the two separate mobile stations MS1, MS2, i.e.

    StNR_MS1_Combined = f1 (SINR_MS1, StNR_MS2)
    SINR_MS2_Combined = f2(SINR_MS1, SINR_MS2),

and in a subsequent step, the SINR is mapped (using a function g) to a transmission characteristic of the cell B$_j$, e.g. a weighted sum rate R, i.e. R= g(SINR), such that:

    R1 = g(SINR_MS1)
    R1_C = g(SINR_MS1_Combined)
    and
    R2 = g(SINR_MS2)
    R2_C= g(SINR_MS2 Combined).

The condition for paring of two mobile stations may then be given by the following inequality: 2 x (R1_C + R2_C) > (R1 + R2).

It will be understood that the above inequality may also be expressed in terms of the SINR by taking the inverse of the function g. An additional or alternative condition for the pairing can be based on the priority of the mobile stations: In case that MS1 has higher priority than MS2, the condition for pairing is: 2 x R1_C > R1, and, in case that MS2 has higher priority than MS1, the condition for pairing is 2 x R2_C > R2.

The mobile stations MS1 to MS15 are equipped with non-linear receivers, e.g. using interference cancellation. Thus, the mobile station with the weaker SINR gets a much larger portion of the total transmit power than the mobile station with the stronger SINR. Decoding at the mobile stations for such pairings needs to be done as follows: The low-SINR mobile station treats the weak transceiver signal for the high-SINR mobile station as noise and thus ignores it. The high-SINR mobile station first decodes the transceiver signal intended for the low-SINR mobile station and the subtracts it from the sum transceiver signal. Afterwards it is able to decode its own signal from the remaining signal. If such a RDMA pairing is performed, the real-valued amplitude scaling factors $f_{v,i}^{(j)}$ for the paired users within beam $B_i^{(j)}$ are nonzero, whereas the amplitude scaling factors for the other users are zero. For example, a signal generation unit 11 of the base station BS$_j$ of Fig. 1 may generate a downstream signal $b_1^{(j)} = f_{1,1}^{(j)} d_1^{(j)} + f_{2,1}^{(j)} d_2^{(j)}$ for serving the paired mobile stations MS1 and MS2 of beam B$_1^{(j)}$. If no RDMA pairing is used within beam $B_i^{(j)}$, i.e. if a medium SINR user (mobile station) is selected for this beam, only one of the amplitude scaling factors $f_{v,i}^{(j)}$ is nonzero, whereas the amplitude scaling factors for all other users / mobile stations are zero. If the beam $B_i^{(j)}$ is not used at all, the amplitude scaling factors for all users are zero, resulting in $b_i^{(j)} = 0$. Additionally, if the amplitude scaling factor $f_{v,i}^{(j)}$ is zero for a user $v$, the corresponding data signal $d_v^{(j)}$ is also zero, meaning that no data from the user's transmit queues is taken. In the following, the set of selected/paired mobile stations on beam $B_i^{(j)}$ is given by the set of indices $\hat{S}_i^{(j)}$, the set of non-selected users by the set of indices $\overline{S}_i^{(j)}$. Obviously, $\hat{S}_i^{(j)} \cap \overline{S}_i^{(j)} = \{\}$, i.e. each mobile station is either selected or not, and $\hat{S}_i^{(j)} \cup \overline{S}_i^{(j)} = S_i^{(j)}$.

The received signal column vector for mobile station MS$m$ in cell $j$ is $\mathbf{r}_m^{(j)} = \mathbf{H}_m^{(j)} \cdot \mathbf{x}^{(j)} + \mathbf{c}_m^{(j)} + \mathbf{n}_m^{(j)}$. The number of elements of $\mathbf{r}_m^{(j)}$ is equal to the number of the mobile station's receive antennas $N_{\text{Rx},m}^{(j)}$. is the $N_{\text{Rx},m}^{(j)} \times N_{\text{Tx}}^{(j)}$ channel matrix for mobile station MS$m$ in communications cell $j$. Further, $\mathbf{c}_m^{(j)}$ denotes the interference from neighbouring cells and $\mathbf{n}_m^{(j)}$ represents any additive noise such as thermal noise. The signal after receiver combing with the row weight vector $\mathbf{w}_m^{(j)}$ is $y_m^{(j)} = \mathbf{w}_m^{(j)} \cdot \mathbf{r}_m^{(j)} = \mathbf{w}_m^{(j)} \cdot \mathbf{H}_m^{(j)} \cdot \mathbf{x}^{(j)} + \mathbf{c}_m^{(j)} + \mathbf{n}_m^{(j)}$ or further written

out
$$y_m^{(j)} = \underbrace{\mathbf{w}_m^{(j)} \cdot \mathbf{H}_m^{(j)} \cdot \mathbf{p}_\mu \cdot \mathbf{b}_\mu^{(j)}}_{\text{Contains desired signal}} + \underbrace{\mathbf{w}_m^{(j)} \cdot \mathbf{H}_m^{(j)} \cdot \sum_{\substack{n=1 \\ n \neq \mu}}^{N_B} \mathbf{p}_n \cdot \mathbf{b}_n^{(j)}}_{\text{Filtered intra-cell inter-beam interference}} + \underbrace{\mathbf{w}_m^{(j)} \cdot (\mathbf{c}_m^{(j)} + \mathbf{n}_m^{(j)})}_{\text{Filtered inter-cell interference and noise}} \ .$$
Note that $m \in S_\mu^{(j)}$, i.e. the considered mobile station MS$m$ is associated with beam $B_\mu^{(j)}$.

The design of the receiver combing row weight vector $\mathbf{w}_m^{(j)}$ can be done with different approaches. The vector $\mathbf{w}_m^{(j)}$ could be either computed according to the maximum-ratio combining (MRC) approach, or it could be computed in such a way that the ratio of the desired signal with respect to the inter-cell interference is maximized. The latter approach is also known as interference-rejection combining (IRC).

If *no* RDMA user pairing has been performed on beam $B_\mu^{(j)}$, the received signal after combining is:

$$y_m^{(j)} = \underbrace{\mathbf{w}_m^{(j)} \cdot \mathbf{H}_m^{(j)} \cdot \mathbf{p}_\mu \cdot f_{\mu,m}^{(j)} \cdot}_{\text{Complex-valued scalar factor}} \underbrace{d_m^{(j)}}_{\text{Desired data signal}} + \underbrace{\mathbf{w}_m^{(j)} \cdot \mathbf{H}_m^{(j)} \cdot \sum_{\substack{n=1 \\ n \neq \mu}}^{N_B} \mathbf{p}_n \cdot \mathbf{b}_n^{(j)}}_{\text{Filtered intra-cell inter-beam interference}} + \underbrace{\mathbf{w}_m^{(j)} \cdot (\mathbf{c}_m^{(j)} + \mathbf{n}_m^{(j)})}_{\text{Filtered inter-cell interference and noise}}$$

If RDMA user pairing has been performed on beam $B_\mu^{(j)}$, the received signal after combining becomes:

$$y_m^{(j)} = \underbrace{\mathbf{w}_m^{(j)} \cdot \mathbf{H}_m^{(j)} \cdot \mathbf{p}_\mu \cdot f_{\mu,m}^{(j)} \cdot}_{\text{Complex-valued scalar factor}} \underbrace{d_m^{(j)}}_{\text{Desired data signal}} + \underbrace{\mathbf{w}_m^{(j)} \cdot \mathbf{H}_m^{(j)} \cdot \mathbf{p}_\mu \cdot \sum_{n \in \{\hat{S}_\mu^{(j)} \backslash m\}} f_{\mu,n}^{(j)} d_n^{(j)}}_{\text{Filtered intra-cell intra-beam interference}} +$$

$$\underbrace{\mathbf{w}_m^{(j)} \cdot \mathbf{H}_m^{(j)} \cdot \sum_{\substack{n=1 \\ n \neq \mu}}^{N_B} \mathbf{p}_n \cdot \mathbf{b}_n^{(j)}}_{\text{Filtered intra-cell inter-beam interference}} + \underbrace{\mathbf{w}_m^{(j)} \cdot (\mathbf{c}_m^{(j)} + \mathbf{n}_m^{(j)})}_{\text{Filtered inter-cell interference and noise}}$$

We now have two possible different situations:

    1. The considered RDMA paired mobile station MS$m$ is a low-SINR mobile station.

In this case, the intra-cell intra-beam interference cannot be cancelled and acts as additional interference for the desired signal. However, the RDMA user pairing must have ensured anyhow that this additional interference is at an acceptable level by having selected the $f_{v,m}^{(j)}$, $v \in S_\mu^{(j)}$, appropriately.

    2. The considered RDMA paired mobile station MS$m$ is a high SINR mobile station:

In this case the mobile station can fully cancel the intra-cell intra-beam interference by means of nonlinear interference cancellation techniques. The resulting signal after interference cancellation becomes

$$\tilde{y}_m^{(j)} = \underbrace{\mathbf{w}_m^{(j)} \cdot \mathbf{H}_m^{(j)} \cdot \mathbf{p}_\mu \cdot f_{\mu,m}^{(j)} \cdot}_{\text{Scalar factor}} \underbrace{d_m^{(j)}}_{\text{Desired data signal}} + \underbrace{\mathbf{w}_m^{(j)} \cdot \mathbf{H}_m^{(j)} \cdot \sum_{\substack{n=1 \\ n \neq \mu}}^{N_B} \mathbf{p}_n \cdot \mathbf{b}_n^{(j)}}_{\text{Filtered intra-cell inter-beam interference}} + \underbrace{\mathbf{w}_m^{(j)} \cdot (\mathbf{c}_m^{(j)} + \mathbf{n}_m^{(j)})}_{\text{Filtered inter-cell interference and noise}}$$

The amplitude scaling factors are chosen in such a way that the mobile station can cancel the intra-cell intra-beam interference with a high probability under the constraint that the other paired mobile station can decode its signal with the intra-cell intra-beam interference also with a high probability.

The scheduling and amplitude scaling task is now:

- Choose the amplitude scaling factors $f_{v,i}^{(j)}$ for all beams in such a way that some metric is optimized.
- Take into account the nonlinear MS receivers with interference cancellation for RDMA user pairing.
- Allow and perform power loading per beam meaning that we may have

$$\sum_{v\in\tilde{S}_p^{(j)}}\left|f_{v,p}^{(j)}\right|^2 E\left\{\left|d_v^{(j)}\right|^2\right\} \neq \sum_{v\in\tilde{S}_q^{(j)}}\left|f_{v,q}^{(j)}\right|^2 E\left\{\left|d_v^{(j)}\right|^2\right\}, \quad p,q=1,\ldots,N_B, \quad p\neq q.$$

- The metric for optimization is for example the weighted sum rate, which needs to be maximized.
- An alternative metric is the total transmit power under the constraint of some guaranteed bit rate for the MS. The total transmit power needs to be minimized.
- Another alternative metric is the maximum cell sum throughput with the constraint of some guaranteed minimum (cell-edge) MS bit rate. This metric needs to be maximized.

In the process described herein, in addition to the RDMA user pairing and power allocation per user within a beam, the power allocation per user is treated across all beams. This means that in the optimization of the target metric not only the intra-cell intra-beam interference is taken into account, but also the intra-cell inter-beam interference is considered.

An illustrative example of the above procedure will be given in the following with reference to Fig. 1: A potential scheduling result would be for example that high-SINR mobile station MS3 is paired with low-SINR mobile station MS1 on beam $B_1^{(j)}$. For the amplitude scaling factors we have $f_{1,1}^{(j)} < f_{2,1}^{(j)}$. In addition, the scheduler also selects medium-SINR mobile station MS8 on beam $B_3^{(j)}$ without an RDMA partner. The scheduler's optimization routine determines that the optimum is achieved if the power for $B_3^{(j)}$ is higher than for beam $B_1^{(j)}$, i.e.

$$\left|f_{8,3}^{(j)}\right|^2 E\left\{\left|d_8^{(j)}\right|^2\right\} > \sum_{v\in\{1,2\}}\left|f_{v,1}^{(j)}\right|^2 E\left\{\left|d_v^{(j)}\right|^2\right\} \text{ or } \left|f_{8,3}^{(j)}\right|^2 > \sum_{v\in\{1,2\}}\left|f_{v,1}^{(j)}\right|^2 \text{ for the common case of}$$

$$E\left\{\left|d_v^{(j)}\right|^2\right\} = E\left\{\left|d_\eta^{(j)}\right|^2\right\}, \quad v,\eta\in\{1,2,8\}.$$

Adaptive beams

Instead of having the set of fixed transmit antenna weights, in the following, an user $m$ will be allowed to use its individual precoding vector $p_m$. The optimization problem will be increased in complexity as in principle each user can have fully individual weights.

It is now proposed to use the same weights for paired RDMA users, having the following advantages:

- Dedicated pilot resources (required for channel estimation and equalization) can be re-used for all paired RDMA users, which reduces the required pilot overhead, and
- The consumption of the resource 'space' will be reduced, i.e. more SDMA resources will be available for other users.

As there are many existing adaptive beamforming algorithms, in the following only two solutions will be described: direction-based beamforming and Eigenbeamforming.

Solution for direction-based beamforming:

The angle of arrival $\Theta_m$ for user $m$ can be estimated in the uplink and used in the downlink for beam steering towards the same direction. User $m$ and $n$ now can be considered as suitable RDMA partners if their angle of arrivals are within a certain threshold. This can either be in linear space $|\Theta_m - \Theta_n| < T_{angle}$ or in cosine-space $\{\cos\Theta_m - \cos\Theta_n| < T_{angle,cos}$.

For the joint weights of the RDMA paired users a mean direction now can be chosen for beam steering. This can either be in linear space:

$$\Theta_{mean,linear} = 1/2\left(\Theta_m + \Theta_n\right),$$

or in cosine-space:

$$\Theta_{mean,linear} = \arccos(1/2\left(\cos\Theta_m + \cos\Theta_n\right)).$$

Alternatively, the new 'compromise' direction $\Theta_{mean,linear}$ can be chosen as a function of the two angles $\Theta_m$, $\Theta_n$, e.g. taking into account the resulting antenna pattern, including the single element pattern, and the resulting antenna gains in the directions of interest.

The angular thresholds have to decrease with increasing number of antenna elements, causing narrower beam patterns.

Solution for Eigenbeamforming:

The transmit weight $\mathbf{p}_m$ for a given user m is determined from the principle component of its channel matrix $\mathbf{H}_m$. Users now can be paired for RDMA if their scalar product exceeds a certain threshold close to one (in case of normalized weights), meaning that their Eigenbeams will be strongly correlated:

$$\left|\mathbf{p}_m{}^H \cdot \mathbf{p}_n\right| > T_{weight}.$$

For RDMA pairs, the joint transmit weights can be formed by a re-normalized 'compromise'

$$\mathbf{p}_{joint,m,n} = \frac{\mathbf{p}_m + \mathbf{p}_n}{2\left\|\mathbf{p}_m + \mathbf{p}_n\right\|}.$$

This solution can also be used for direction-based beamforming (or other adaptive beamforming techniques), when the Eigenbeamforming weights are replaced by the direction-based steering vectors (or the weights of any other adaptive beamforming technique).

Alternatively the new joint transmit weight vector $\mathbf{p}_{joint,m,n}$ can be any function of $\mathbf{p}_m, \mathbf{p}_n$.

**II.) Multi-cell solution for RDMA + SDMA**

Fixed beams

For the description of the multi-cell solution we make a slight modification of the notation. We introduce $N_u$ as the total number of mobile stations MS in the system with $N_c$ cells. Obviously, $N_u = \sum_{j=1}^{N_c} N_u^{(j)}$. The mobile stations MS are now again labeled MS$m$, but with $m \in S = \{1,..., N_u\}$. As opposed to the single-cell solution, the elements in the individual index sets for the cells do not run from 1 to $N_u^{(j)}$, but simply contain some indices from the set $S$. For the index set $S$ we now have $S = \bigcup_j S^{(j)}$. With this modification of the notation we can address the MS with the index $m$ across the whole system and not just within the cell $j$.

In the multi-cell solution for RDMA + SDMA, low SINR mobile stations can be in the index sets of more than one cell, as shown in Fig. 2: MS$m$ (here $m = 2$) can be found in the index set of cell B$_j$ ($m \in S^{(1)}$) and cell B$_k$ ($m \in S^{(2)}$), and $m \in S^{(1)} \cap S^{(2)}$. In Fig. 2, only the base stations BS$_j$ and BS$_k$ of cell B$_j$ and cell B$_k$ together with two SDMA resources (beam B$_1^{(j)}$ and beam B$_2^{(k)}$) are shown, the cells B$_j$, B$_k$ being part of a communications system 1.

A pair of RDMA users (MS1, MS2), resp. (MS2, MS3) is served inside each SDMA resource / beam B$_1^{(j)}$, B$_2^{(k)}$.

Thus, mobile station MS2 in the overlapping region of the cells $B_j$, $B_k$ resp. beams $B_1^{(j)}$, $B_2^{(k)}$ belonging to the cells $B_j$, $B_k$ is served jointly from two sites e.g. with distributed SFBC. The "inner" mobile stations MS1 and MS3 are served from their own cell ($B_j$ or $B_k$) exclusively.

In all cells $B_j$, $B_k$ a fixed beamforming with precoding matrix **P** is performed as described above. The low SINR mobile station MS$m$ is further associated with a certain beam in each of the two cells, i.e. we further have $m \in S_u^{(1)}$ and $m \in S_v^{(2)}$, $u,v \in \{1,...,N_B\}$. On the beam $B_u^{(1)}$ in cell $B_1$, the low-SINR MS$m$ is paired with a high-SINR MS$n$, $n \in S_u^{(1)}$, also associated with beam $B_u^{(1)}$. On the beam $B_v^{(2)}$ in cell $B_2$, the same low SINR MS $m$ is paired with another higher SINR MS$p$, $p \in S_v^{(2)}$ also associated with beam $B_v^{(2)}$. Thus, the sum transmit signal $b_u^{(1)}$ is built up from data intended for MS$m$ and MS$n$, whereas the sum transmit signal $b_v^{(2)}$ is built up from data intended for MS$m$ and MS$p$. (In the example of Fig. 2 we have $m=2$, $n=1$, and $p=3$.)

In the solution proposed herein, the transmission to the low SINR mobile station MS$m$ shall further be space-frequency or space-time block encoded

(SFBC/STBC). This requires that the data for mobile station MS$m$ must be available in both serving cells $B_j$ and $B_k$. So we need to look at a pair of frequency resources (e.g. adjacent subcarriers in an OFDMA system) or at a pair of time resources (e.g. adjacent OFDM symbols in an OFDMA system).

In the following, let us focus on the case where this resource pair is made up of adjacent resources which can therefore be indexed with $k$ and $k+1$. For space-frequency/space-time block encoding we use for example the orthogonal code described by

$$C = \begin{bmatrix} d_{v,k}^{(1)} & d_{v,k+1}^{(1)} \\ d_{v,k}^{(2)} & d_{v,k+1}^{(2)} \end{bmatrix}, \quad d_{v,k}^{(2)} = -d_{v,k+1}^{(1)}{}^*, \quad d_{v,k+1}^{(2)} = d_{v,k}^{(1)}{}^*,$$ and therefore

$$C = \begin{bmatrix} d_{v,k}^{(1)} & d_{v,k+1}^{(1)} \\ -d_{v,k+1}^{(1)}{}^* & d_{v,k}^{(1)}{}^* \end{bmatrix}.$$ (However, any other orthogonal code could also be used.)

We define the data vector for low SINR MS$m$ on resources $k$ and $k+1$ as $\mathbf{d}_{m,k} = \begin{bmatrix} d_{m,k}^{(1)} & d_{m,k+1}^{(1)}{}^* \end{bmatrix}^T$. For cell $B_j$ (i=1) the sum transmit signal on beam $B_u^{(1)}$ on resource $k$ is $b_{u,k}^{(1)} = \sum_{v \in S_u^{(1)}} f_{v,u,k}^{(1)} d_{v,k}^{(1)} = f_{m,u,k}^{(1)} d_{m,k}^{(1)} + f_{n,u,k}^{(1)} d_{n,k}^{(1)}$,

and on resource $k+1$ it is $b_{u,k+1}^{(1)} = \sum_{v \in S_u^{(1)}} f_{v,u,k+1}^{(1)} d_{v,k+1}^{(1)} = f_{m,u,k+1}^{(1)} d_{m,k+1}^{(1)} + f_{n,u,k+1}^{(1)} d_{n,k+1}^{(1)}$. For cell $B_k$ (k=2) the sum transmit signal on beam $B_v^{(2)}$ on resource $k$ is $b_{v,k}^{(2)} = \sum_{v \in S_v^{(2)}} f_{v,v,k}^{(2)} d_{v,k}^{(2)} = -f_{m,v,k}^{(2)} d_{m,k+1}^{(1)}{}^* + f_{p,v,k}^{(2)} d_{p,k}^{(2)}$,

and on resource $k+1$ it is $b_{v,k+1}^{(2)} = \sum_{v \in S_v^{(2)}} f_{v,v,k+1}^{(2)} d_{v,k+1}^{(2)} = f_{m,v,k+1}^{(2)} d_{m,k}^{(1)}{}^* + f_{p,v,k+1}^{(2)} d_{p,k+1}^{(2)}$. We assume that the amplitude scaling factors for all the mobile stations are the same for both resources $k$ and $k+1$, i.e. $f_{v,i,k}^{(j)} = f_{v,i,k+1}^{(j)}$.

The full signal transmit vector for each cell $\mathbf{x}^{(j)}$ is obtained by multiplying the precoding matrix **P** to the vector of sum transmit signals per beam $\mathbf{b}^{(j)}$ as described above for the single-cell case. The received signals for our considered low-SINR mobile station MS$m$ and high-SINR mobile station MS$n$ and MS $p$ are as follows:

- $r_{m,k}^{(1,2)} = H_{m,k}^{(1)} \cdot x_k^{(1)} + H_{m,k}^{(2)} \cdot x_k^{(2)} + c_{m,k}^{(1,2)} + n_{m,k}^{(1,2)}$ ,

  $r_{m,k+1}^{(1,2)} = H_{m,k+1}^{(1)} \cdot x_{k+1}^{(1)} + H_{m,k+1}^{(2)} \cdot x_{k+1}^{(2)} + c_{m,k+1}^{(1,2)} + n_{m,k+1}^{(1,2)}$

- $r_{n,k}^{(1)} = H_{n,k}^{(1)} \cdot x_k^{(1)} + c_{n,k}^{(1)} + n_{n,k}^{(1)}$ , $r_{n,k+1}^{(1)} = H_{n,k}^{(1)} \cdot x_{k+1}^{(1)} + c_{n,k+1}^{(1)} + n_{n,k+1}^{(1)}$

- $r_{p,k}^{(2)} = H_{p,k}^{(2)} \cdot x_k^{(2)} + c_{p,k}^{(2)} + n_{p,k}^{(2)}$ , $r_{p,k+1}^{(2)} = H_{p,k+1}^{(2)} \cdot x_{k+1}^{(2)} + c_{p,k+1}^{(2)} + n_{p,k+1}^{(2)}$

Note that for the mobile stations MS$n$ and MS$p$ we consider the signals from cell $B_j$ and cell $B_k$ , respectively, as inter-cell interference in $c_{n,k}^{(1)}$ and $c_{p,k}^{(2)}$ , respectively.

The mobile stations MS$n$ and MS$p$ perform receive combining as described above for the single-cell scenario. In the cancellation of the intra-cell intra-beam interference coming from the transmission to mobile station MS$m$, the mobile station MS$p$ must take into account the space-frequency (space-time) coding for mobile station MS$m$. According to the above described code C , the mobile station MS$n$ can treat the transmission to mobile station MS$m$ without taking the frequency (space-time) coding into account.

For the low SINR mobile station MS$m$ we have to perform SFBC (STBC) decoding. We further detail the received signal for MS$m$ :

$$r_{m,k}^{(1,2)} = H_{m,k}^{(1)} \cdot p_u \cdot b_{u,k}^{(1)} + H_{m,k}^{(1)} \cdot \sum_{\substack{q=1 \\ q \neq u}}^{N_B} p_q \cdot b_{q,k}^{(1)} + H_{m,k}^{(2)} \cdot p_v \cdot b_{v,k}^{(2)} + H_{m,k}^{(2)} \cdot \sum_{\substack{q=1 \\ q \neq v}}^{N_B} p_q \cdot b_{q,k}^{(2)} + c_{m,k}^{(1,2)} + n_{m,k}^{(1,2)}$$

$$= \underbrace{H_{m,k}^{(1)} \cdot p_u \cdot f_{m,u,k}^{(1)} \cdot d_{m,k}^{(1)}}_{\text{Contains desired signal from cell 1}} + \underbrace{H_{m,k}^{(1)} \cdot p_u \cdot f_{n,u,k}^{(1)} \cdot d_{n,k}^{(1)}}_{\text{Intra-beam interference from cell 1}} + \underbrace{H_{m,k}^{(1)} \cdot \sum_{\substack{q=1 \\ q \neq u}}^{N_B} p_q \cdot b_{q,k}^{(1)}}_{\text{Inter-beam interference from cell 1}} +$$

$$\underbrace{H_{m,k}^{(2)} \cdot p_v \cdot (-f_{m,v,k}^{(2)}) \cdot d_{m,k+1}^{(1)\,*}}_{\text{Contains desired signal from cell 2}} + \underbrace{H_{m,k}^{(2)} \cdot p_v \cdot f_{p,v,k}^{(2)} d_{p,k}^{(2)}}_{\text{Intra-beam interference from cell 2}} + \underbrace{H_{m,k}^{(2)} \cdot \sum_{\substack{q=1 \\ q \neq v}}^{N_B} p_q \cdot b_{q,k}^{(2)}}_{\text{Inter-beam interference from cell 2}} +$$

$$\underbrace{c_{m,k}^{(1,2)}}_{\text{Other inter-cell interference}} + \underbrace{n_{m,k}^{(1,2)}}_{\text{Additve noise}}$$

and

$$\mathbf{r}_{m,k+1}^{(1,2)} = \mathbf{H}_{m,k+1}^{(1)} \cdot \mathbf{p}_u \cdot b_{u,k+1}^{(1)} + \mathbf{H}_{m,k+1}^{(1)} \cdot \sum_{\substack{q=1 \\ q \neq u}}^{N_B} \mathbf{p}_q \cdot b_{q,k+1}^{(1)} + \mathbf{H}_{m,k+1}^{(2)} \cdot \mathbf{p}_v \cdot b_{v,k+1}^{(2)} + \mathbf{H}_{m,k+1}^{(2)} \cdot \sum_{\substack{q=1 \\ q \neq v}}^{N_B} \mathbf{p}_q \cdot b_{q,k+1}^{(2)}$$

$$+ \mathbf{c}_{m,k+1}^{(1,2)} + \mathbf{n}_{m,k+1}^{(1,2)}$$

$$\overset{\mathbf{H}_{m,k+1}^{(1)} = \mathbf{H}_{m,k}^{(1)}}{\underset{\mathbf{H}_{m,k+1}^{(2)} = \mathbf{H}_{m,k}^{(2)}}{=}} \underbrace{\mathbf{H}_{m,k}^{(1)} \cdot \mathbf{p}_u \cdot f_{m,u,k}^{(1)} \cdot d_{m,k+1}^{(1)}}_{\text{Contains desired signal from cell 1}} + \underbrace{\mathbf{H}_{m,k}^{(1)} \cdot \mathbf{p}_u \cdot f_{n,u,k}^{(1)} \cdot d_{n,k+1}^{(1)}}_{\text{Intra-beam interference from cell 1}} + \underbrace{\mathbf{H}_{m,k}^{(1)} \cdot \sum_{\substack{q=1 \\ q \neq u}}^{N_B} \mathbf{p}_q \cdot b_{q,k+1}^{(1)}}_{\text{Inter-beam interference from cell 1}} +$$

$$\underbrace{\mathbf{H}_{m,k}^{(2)} \cdot \mathbf{p}_v \cdot f_{m,v,k}^{(2)} d_{m,k}^{(1)*}}_{\text{Contains desired signal from cell 2}} + \underbrace{\mathbf{H}_{m,k}^{(2)} \cdot \mathbf{p}_v \cdot f_{p,v,k}^{(2)} d_{p,k+1}^{(2)}}_{\text{Intra-beam interference from cell 2}} + \underbrace{\mathbf{H}_{m,k}^{(2)} \cdot \sum_{\substack{q=1 \\ q \neq v}}^{N_B} \mathbf{p}_q \cdot b_{q,k+1}^{(2)}}_{\text{Inter-beam interference from cell 2}}$$

$$+ \underbrace{\mathbf{c}_{m,k+1}^{(1,2)}}_{\text{Other inter-cell interference}} + \underbrace{\mathbf{n}_{m,k+1}^{(1,2)}}_{\text{Additve noise}}$$

The received signal vectors $\mathbf{r}_{m,k}^{(1,2)}$ and $\mathbf{r}_{m,k+1}^{(1,2)}$ have as many elements as MS$m$ has receiver antennas, i.e.

$$\mathbf{r}_{m,k}^{(1,2)} = \begin{bmatrix} r_{m,k,1}^{(1,2)} & r_{m,k,2}^{(1,2)} & \cdots & r_{m,k,N_{Rx}}^{(1,2)} \end{bmatrix}^T \text{ and } \mathbf{r}_{m,k+1}^{(1,2)} = \begin{bmatrix} r_{m,k+1,1}^{(1,2)} & r_{m,k+1,2}^{(1,2)} & \cdots & r_{m,k+1,N_{Rx}}^{(1,2)} \end{bmatrix}^T.$$ We now form new vectors by writing the $i$-th elements of $\mathbf{r}_{m,k}^{(1,2)}$ and $\mathbf{r}_{m,k+1}^{(1,2)}$ into $N_{Rx}$ 2-element column vectors:

$$\tilde{\mathbf{r}}_{m,k,i}^{(1,2)} = \begin{bmatrix} r_{m,k,i}^{(1,2)} & r_{m,k+1,i}^{(1,2)*} \end{bmatrix}^T, \quad i = 1,\ldots,N_{Rx}.$$ Further, we define the $N_{Rx}$-element effective channel vectors

$$\tilde{\mathbf{h}}_{m,k,q}^{(1)} = \mathbf{H}_{m,k}^{(1)} \cdot \mathbf{p}_q = \begin{bmatrix} \tilde{h}_{m,k,q,1}^{(1)} & \tilde{h}_{m,k,q,2}^{(1)} & \cdots & \tilde{h}_{m,k,q,N_{Rx}}^{(1)} \end{bmatrix}^T, \quad q = 1,\ldots,N_B, \text{ and}$$

$$\tilde{\mathbf{h}}_{m,k,q}^{(2)} = \mathbf{H}_{m,k}^{(2)} \cdot \mathbf{p}_q = \begin{bmatrix} \tilde{h}_{m,k,q,1}^{(2)} & \tilde{h}_{m,k,q,2}^{(2)} & \cdots & \tilde{h}_{m,k,q,N_{Rx}}^{(2)} \end{bmatrix}^T, \quad q = 1,\ldots,N_B. \text{ We then get}$$

$$r_{m,k,i}^{(1,2)} = \tilde{h}_{m,k,u,i}^{(1)} \cdot f_{m,u,k}^{(1)} \cdot d_{m,k}^{(1)} + \tilde{h}_{m,k,u,i}^{(1)} \cdot f_{n,u,k}^{(1)} \cdot d_{n,k}^{(1)} + \sum_{\substack{q=1 \\ q \neq u}}^{N_B} \tilde{h}_{m,k,q,i}^{(1)} \cdot b_{q,k}^{(1)}$$

$$+ \tilde{h}_{m,k,v,i}^{(2)} \cdot (-f_{m,v,k}^{(2)}) \cdot d_{m,k+1}^{(1)*} + \tilde{h}_{m,k,v,i}^{(2)} \cdot f_{p,v,k}^{(2)} \cdot d_{p,k}^{(2)} + \sum_{\substack{q=1 \\ q \neq u}}^{N_B} \tilde{h}_{m,k,q,i}^{(2)} \cdot b_{q,k}^{(2)} + c_{m,k,i}^{(1,2)} + n_{m,k,i}^{(1,2)}$$

and

$$r_{m,k+1,i}^{(1,2)*} = \tilde{h}_{m,k,u,i}^{(1)*} \cdot f_{m,u,k}^{(1)} \cdot d_{m,k+1}^{(1)*} + \tilde{h}_{m,k,u,i}^{(1)*} \cdot f_{n,u,k}^{(1)} \cdot d_{n,k+1}^{(1)*} + \sum_{\substack{q=1 \\ q \neq u}}^{N_B} \tilde{h}_{m,k,q,i}^{(1)*} \cdot b_{q,k+1}^{(1)*}$$

$$+ \tilde{h}_{m,k,v,i}^{(2)*} \cdot f_{m,v,k}^{(2)} \cdot d_{m,k}^{(1)} + \tilde{h}_{m,k,v,i}^{(2)*} \cdot f_{p,v,k}^{(2)} \cdot d_{p,k+1}^{(2)*} + \sum_{\substack{q=1 \\ q \neq u}}^{N_B} \tilde{h}_{m,k,q,i}^{(2)*} \cdot b_{q,k+1}^{(2)*} + c_{m,k+1,i}^{(1,2)*} + n_{m,k+1,i}^{(1,2)*}$$

or in matrix notation:

$$\widetilde{\mathbf{r}}_{m,k,i}^{(1,2)} = \begin{bmatrix} r_{m,k,i}^{(1,2)} \\ r_{m,k+1,i}^{(1,2)}{}^{*} \end{bmatrix} = \underbrace{\begin{bmatrix} \widetilde{h}_{m,k,u,i}^{(1)} \cdot f_{m,u,k}^{(1)} & -\widetilde{h}_{m,k,v,i}^{(2)} \cdot f_{m,v,k}^{(2)} \\ \widetilde{h}_{m,k,v,i}^{(2)}{}^{*} \cdot f_{m,v,k}^{(2)} & \widetilde{h}_{m,k,u,i}^{(1)}{}^{*} \cdot f_{m,u,k}^{(1)} \end{bmatrix}}_{\mathbf{U}_{m,k,i}^{(1,2)}} \cdot \underbrace{\begin{bmatrix} d_{m,k}^{(1)} \\ d_{m,k+1}^{(1)}{}^{*} \end{bmatrix}}_{\mathbf{d}_{m,k}} +$$

$$+ \underbrace{\begin{bmatrix} \widetilde{h}_{m,k,u,i}^{(1)} \cdot f_{n,u,k}^{(1)} \cdot d_{n,k}^{(1)} \\ \widetilde{h}_{m,k,u,i}^{(1)}{}^{*} \cdot f_{n,u,k}^{(1)} \cdot d_{n,k+1}^{(1)}{}^{*} \end{bmatrix}}_{\text{Intra-beam interference from cell 1}} + \underbrace{\begin{bmatrix} \widetilde{h}_{m,k,v,i}^{(2)} \cdot f_{p,v,k}^{(2)} \cdot d_{p,k}^{(2)} \\ \widetilde{h}_{m,k,v,i}^{(2)}{}^{*} \cdot f_{p,v,k}^{(2)} \cdot d_{p,k+1}^{(2)} \end{bmatrix}}_{\text{Intra-beam interference from cell 2}}$$

$$+ \underbrace{\begin{bmatrix} \sum_{\substack{q=1 \\ q \neq u}}^{N_B} \widetilde{h}_{m,k,q,i}^{(1)} \cdot b_{q,k}^{(1)} \\ \sum_{\substack{q=1 \\ q \neq u}}^{N_B} \widetilde{h}_{m,k,q,i}^{(1)}{}^{*} \cdot b_{q,k+1}^{(1)} \end{bmatrix}}_{\text{Inter-beam interference from cell 1}} + \underbrace{\begin{bmatrix} \sum_{\substack{q=1 \\ q \neq u}}^{N_B} \widetilde{h}_{m,k,q,i}^{(2)} \cdot b_{q,k}^{(2)} \\ \sum_{\substack{q=1 \\ q \neq u}}^{N_B} \widetilde{h}_{m,k,q,i}^{(2)}{}^{*} \cdot b_{q,k+1}^{(2)} \end{bmatrix}}_{\text{Inter-beam interference from cell 2}} + \underbrace{\begin{bmatrix} c_{m,k,i}^{(1,2)} \\ c_{m,k+1,i}^{(1,2)}{}^{*} \end{bmatrix}}_{\text{Other inter-cell interference}} + \underbrace{\begin{bmatrix} n_{m,k,i}^{(1,2)} \\ n_{m,k+1,i}^{(1,2)}{}^{*} \end{bmatrix}}_{\text{Additive noise}}$$

$$= \underbrace{\begin{bmatrix} \widetilde{h}_{m,k,u,i}^{(1)} \cdot f_{m,u,k}^{(1)} & -\widetilde{h}_{m,k,v,i}^{(2)} \cdot f_{m,v,k}^{(2)} \\ \widetilde{h}_{m,k,v,i}^{(2)}{}^{*} \cdot f_{m,v,k}^{(2)} & \widetilde{h}_{m,k,u,i}^{(1)}{}^{*} \cdot f_{m,u,k}^{(1)} \end{bmatrix}}_{\mathbf{U}_{m,k,i}^{(1,2)}} \cdot \begin{bmatrix} d_{m,k}^{(1)} \\ d_{m,k+1}^{(1)}{}^{*} \end{bmatrix} + \underbrace{\begin{bmatrix} z_{m,k,i}^{(1,2)} \\ z_{m,k+1,i}^{(1,2)}{}^{*} \end{bmatrix}}_{\mathbf{z}_{m,k,i}^{(1,2)} \text{ (Total interference and noise)}}$$

We note that the newly defined matrices $\mathbf{U}_{m,k,i}^{(1,2)}$, $i = 1, \ldots, N_{\text{Rx}}$, satisfy $\mathbf{U}_{m,k,i}^{(1,2)\,\text{H}} \cdot \mathbf{U}_{m,k,i}^{(1,2)} = \beta_{k,i} \cdot \mathbf{I}$ with

$\beta_{k,i} = \left| \widetilde{h}_{m,k,u,i}^{(1)} \cdot f_{m,u,k}^{(1)} \right|^2 + \left| \widetilde{h}_{m,k,v,i}^{(2)} \cdot f_{m,v,k}^{(2)} \right|^2$. We can therefore use the $\mathbf{U}_{m,k,i}^{(1,2)\,\text{H}}$ as the combining weight matrices that we apply to the vectors of the received signal $\widetilde{\mathbf{r}}_{m,k,i}^{(1,2)}$ and arrive at the 2-element received signal vectors after

combining $\mathbf{y}_{m,k,i}^{(1,2)} = \mathbf{U}_{m,k,i}^{(1,2)\,\text{H}} \cdot \widetilde{\mathbf{r}}_{m,i}^{(1,2)} = \beta_{k,i} \mathbf{d}_{m,k} + \mathbf{U}_{m,k,i}^{(1,2)\,\text{H}} \cdot \mathbf{z}_{m,k,i}^{(1,2)}$ and finally after summing up all the individual

$\mathbf{y}_{m,k,i}^{(1,2)}$, $i = 1, \ldots, N_{\text{Rx}}$, at $\widetilde{\mathbf{y}}_{m,k}^{(1,2)} = \sum_{i=1}^{N_{\text{Rx}}} \mathbf{y}_{m,k,i}^{(1,2)} = \mathbf{d}_{m,k} \cdot \sum_{i=1}^{N_{\text{Rx}}} \beta_{k,i} + \sum_{i=1}^{N_{\text{Rx}}} \mathbf{U}_{m,k,i}^{(1,2)\,\text{H}} \cdot \mathbf{z}_{m,k,i}^{(1,2)}$.

With this, we have extracted the desired data signal vector $\mathbf{d}_{m,k}$ for the low SINR MS$m$.

As in the single-cell scenario above the scheduling task is:

- Choose the amplitude scaling factors $f_{v,i}^{(j)}$ for all beams and all cells in such a way that some metric is optimized.
- Take into account the nonlinear MS receivers with interference cancellation for RDMA user pairing.
- Take into account the potential collaboration of cells for serving low SINR

MS with SFBC / STBC.

- Allow and perform power loading per beam meaning that we may have .

$$\sum_{v \in \hat{S}_p^{(j)}} \left| f_{v,p}^{(j)} \right|^2 E\left\{ \left| d_v^{(j)} \right|^2 \right\} \neq \sum_{v \in \hat{S}_q^{(j)}} \left| f_{v,q}^{(j)} \right|^2 E\left\{ \left| d_v^{(j)} \right|^2 \right\}, \quad p,q = 1, \ldots, N_B, \quad p \neq q.$$

- The metric for optimization is for example the weighted sum rate, which needs to be maximized.

- An alternative metric is the total transmit power under the constraint of some guaranteed bit rate for the MS. The total transmit power needs to be minimized.

- Another alternative metric is the maximum cell sum throughput with the constraint of some guaranteed minimum (cell-edge) MS bit rate. This metric needs to be maximized.

In summary, either within a single communications cell $B_j$ or a plurality of communications cells $B_j$, $B_k$, the combining of SDMA and RDMA resources as described above can be used to optimize the transmission characteristics of a communications system.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims, and equivalents thereof.

**Claims**

1. Method for performing downstream transmissions in a wireless communications network (1), the method comprising:

   selecting at least a first and a second mobile station (MS1, MS2) in at least one of a plurality of beams ($B_1^{(j)}$ to $B_4^{(j)}$) of a communications cell ($B_j$) using space-division multiple access, SDMA, the first mobile station (MS1) having higher Signal to Interference and Noise Ratio, SINR, than the second mobile station (MS2),
   generating a downstream signal ($b_1^{(j)}$) by combining a first data signal ($d_1^{(j)}$) for the first mobile station (MS1) with a second data signal ($d_2^{(j)}$) for the second mobile station (MS2) using non-zero amplitude scaling factors ($f_{1,1}^{(j)}$), $f_{2,1}^{(j)}$),
   transmitting the downstream signal ($b_1^{(j)}$) from a base station ($BS_j$) of the communications cell ($B_j$) to the first and second mobile stations (MS1, MS2),
   in the first mobile station (MS1), before recovering the first data signal ($d_1^{(j)}$) from the transmitted downstream signal, removing the contribution of the second data signal ($d_2^{(j)}$) from the transmitted downstream signal, preferably by using non-linear interference cancellation, and
   in the second mobile station (MS2), recovering the second data signal ($d_2^{(j)}$) from the transmitted downstream signal treating the contribution of the first data signal ($d_1^{(j)}$) as noise.

2. Method according to claim 1, further comprising: selecting the amplitude scaling factors of all the beams ($B_1^{(j)}$ to $B_4^{(j)}$) of the communications cell ($B_j$) such that at least one target transmission characteristic of the communications cell ($B_j$), in particular a weighted sum rate, a total transmit power, or a maximum cell throughput, is optimized.

3. Method according to claim 1, further comprising: generating a common pre-coding vector for the data signals ($d_1^{(j)}$, $d_2^{(j)}$) of the selected mobile stations (MS1, MS2) by combining a pre-coding vector of the first mobile station (MS1) with a pre-coding vector of the second mobile station (MS2).

4. Method according to claim 1, wherein the difference between the SINR of the first selected mobile station (MS1) and the SINR of the second selected mobile station (MS2) is chosen to be larger than a threshold parameter.

5. Method according to claim 1, further comprising:

   selecting a third mobile station (MS3) in a further beam ($B_2^{(k)}$) of a further communications cell ($B_k$) also serving the second mobile station (MS2),
   the third mobile station (MS3) having higher SINR than the second mobile station (MS2),
   generating a further downstream signal for the second mobile station (MS2) by combining the second data signal ($d_2^{(j)}$) for the second mobile station (MS2) with a third data signal for the third mobile station (MS3), and
   transmitting the downstream signal ($b_1^{(j)}$) and the further downstream signal to the second mobile station (MS2) using an open-loop or closed-loop diversity scheme, preferably orthogonal block encoding, in particular space-frequency block encoding or space-time block encoding.

6. Communications cell ($B_j$) for a wireless communications network (1), comprising a base station ($BS_j$) adapted to use space division multiple access, SDMA, and a plurality of mobile stations (MS1, MS2, ...), the base station ($BS_j$) comprising:

   a selection unit (10) for selecting at least a first and a second mobile station (MS1, MS2) in at least one of a plurality of beams ($B_1^{(j)}$ to $B_4^{(j)}$) of the communications cell ($B_j$), the first mobile station (MS1) having higher Signal to Interference and Noise Ratio, SINR, than the second mobile station (MS2),

   a signal generation unit (11) for generating a downstream signal ($b_1^{(j)}$) by combining a first data signal ($d_1^{(j)}$) for the first mobile station (MS1) with a second data signal ($d_2^{(j)}$) for the second mobile station (MS2) using non-zero amplitude scaling factors ($f_{1,1}^{(j)}$, $f_{2,1}^{(j)}$), and

   a transmission unit ($N_{Tx}^{(j)}$) for transmitting the downstream signal ($b_1^{(j)}$) from the base station ($BS_j$) to the first and second mobile stations (MS1, MS2),

   wherein the first mobile station (MS1) is adapted, before recovering the first data signal ($d_1^{(j)}$) from the transmitted downstream signal, to remove the contribution of the second data signal ($d_2^{(j)}$) from the transmitted downstream signal, preferably by using non-linear interference cancellation, and

   wherein the second mobile station (MS2) is adapted to recover the second data signal ($d_2^{(j)}$) from the transmitted downstream signal treating the contribution of the first data signal ($d_1^{(j)}$) as noise.

7. Communications cell according to claim 6, wherein the signal generation unit (11) is adapted for selecting the amplitude scaling factors of the downstream signals of all the beams $B_1^{(j)}$ to $B_4^{(j)}$ of the communications cell ($B_j$) such that at least one target transmission characteristic of the communications cell ($B_j$), in particular a weighted sum rate, a total transmit power, or a maximum cell throughput, is optimized.

8. Communications cell according to claim 6, wherein the signal generation unit (11) is adapted to generate a common pre-coding vector for the data signals ($d_1^{(j)}$, $d_2^{(j)}$) of the selected mobile stations (MS1, MS2) by combining a pre-coding vector of the first mobile station (MS1) with a pre-coding vector of the second mobile station (MS2).

9. Communications cell according to claim 6, wherein the selection unit (10) is adapted to select a first mobile station (MS1) and a second mobile station (MS2) having a difference of the SINR larger than a threshold parameter.

10. Wireless communications network (1) comprising a communications cell ($B_j$) according to claim 6 and at least one further communications cell ($B_k$) according to claim 6.

11. Wireless communications network according to claim 10, wherein a base station ($BS_k$) of the further communications cell ($B_k$) comprises:

   a selection unit (10') adapted for selecting a third mobile station (MS3) in a beam ($B_2^{(k)}$) of the further communications cell ($B_k$) also serving the second mobile station (MS2), the third mobile station (MS3) having higher SINR than the second mobile station (MS2),

   a signal generation unit (11') adapted to generate a further downstream signal by combining the second data signal ($d_2^{(j)}$) for the second mobile station (MS2) with a third data signal for the third mobile station (MS3), and

   a transmitting unit ($N_{Tx}^{(k)}$) for transmitting the further downstream signal to the second and third mobile stations (MS2, MS3), wherein

   an open-loop or a closed-loop diversity scheme, preferably orthogonal block encoding, in particular space-frequency block encoding or space-time block encoding is used for transmitting the downstream signal ($b_1^{(j)}$) and the further downstream signal to the second mobile station (MS2).

12. Computer program product comprising code means adapted to perform all the steps of the method according to claim 1.

**Amended claims in accordance with Rule 137(2) EPC.**

1. Method for performing downstream transmissions in a wireless communications network (1), the method comprising:

   selecting at least a first and a second mobile station (MS1, MS2) in at least one of a plurality of beams ($B_1^{(j)}$ to

$B_4^{(j)}$) of a communications cell ($B_j$) using space-division multiple access, SDMA, the first mobile station (MS1) having higher Signal to Interference and Noise Ratio, SINR, than the second mobile station (MS2),

generating a downstream signal ($b_1^{(j)}$) by combining a first data signal ($d_1^{(j)}$) for the first mobile station (MS1) with a second data signal ($d_2^{(j)}$) for the second mobile station (MS2) using non-zero amplitude scaling factors ($f_{1,1}^{(j)}$, $f_{2,1}^{(j)}$), and

transmitting the downstream signal ($b_1^{(j)}$) from a base station ($BS_j$) of the communications cell ($B_j$) to the first and second mobile stations (MS1, MS2),

the method further comprising: selecting the amplitude scaling factors of all the beams ($B_1^{(j)}$ to $B_4^{(j)}$) of the communications cell ($B_j$) taking intra-cell inter-beam interference into account such that at least one target transmission characteristic of the communications cell ($B_j$) is optimized.

**2.** Method according to claim 1, further comprising: in the first mobile station (MS1), before recovering the first data signal ($d_1^{(j)}$) from the transmitted downstream signal, removing the contribution of the second data signal ($d_2^{(j)}$) from the transmitted downstream signal, and

in the second mobile station (MS2), recovering the second data signal ($d_2^{(j)}$) from the transmitted downstream signal treating the contribution of the first data signal ($d_1^{(j)}$) as noise,

**3.** Method according to claim 1, further comprising: generating a common pre-coding vector for the data signals ($d_1^{(j)}$, $d_2^{(j)}$) of the selected mobile stations (MS1, MS2) by combining a pre-coding vector of the first mobile station (MS1) with a pre-coding vector of the second mobile station (MS2).

**4.** Method according to claim 1, wherein the difference between the SINR of the first selected mobile station (MS1) and the SINR of the second selected mobile station (MS2) is chosen to be larger than a threshold parameter.

**5.** Method according to claim 1, further comprising:

selecting a third mobile station (MS3) in a further beam ($B_2^{(k)}$) of a further communications cell ($B_k$) also serving the second mobile station (MS2),

the third mobile station (MS3) having higher SINR than the second mobile station (MS2),

generating a further downstream signal for the second mobile station (MS2) by combining the second data signal ($d_2^{(j)}$) for the second mobile station (MS2) with a third data signal for the third mobile station (MS3), and

transmitting the downstream signal ($b_1^{(j)}$) and the further downstream signal to the second mobile station (MS2) using an open-loop or closed-loop diversity scheme, preferably orthogonal block encoding, in particular space-frequency block encoding or space-time block encoding.

**6.** Base station ($BS_j$) for a Communications cell ($B_j$) of a wireless communications network (1), the base station ($BS_j$) being adapted to use space division multiple access, SDMA, and comprising:

a selection unit (10) for selecting at least a first and a second mobile station (MS1, MS2) in at least one of a plurality of beams ($B_1^{(j)}$ to $B_4^{(j)}$) of the communications cell ($B_j$), the first mobile station (MS1) having higher Signal to Interference and Noise Ratio, SINR, than the second mobile station (MS2),

a signal generation unit (11) for generating a downstream signal ($b_1^{(j)}$) by combining a first data signal ($d_1^{(j)}$) for the first mobile station (MS1) with a second data signal ($d_2^{(j)}$) for the second mobile station (MS2) using non-zero amplitude scaling factors ($f_{1,1}^{(j)}$), $f_{2,1}^{(j)}$), and

a transmission unit ($N_{Tx}^{(j)}$) for transmitting the downstream signal ($b_1^{(j)}$) from the base station ($BS_j$) to the first and second mobile stations (MS1, MS2), wherein the signal generation unit (11) is adapted for selecting the amplitude scaling factors of the downstream signals of all the beams ($B_1^{(j)}$ to $B_4^{(j)}$) of the communications cell ($B_j$) taking intra-cell inter-beam interference into account such that at least one target transmission characteristic of the communications cell ($B_j$) is optimized.

**7.** Base station according to claim 6, wherein the signal generation unit (11) is adapted to generate a common pre-coding vector for the data signals ($d_1^{(j)}$, $d_2^{(j)}$) of the selected mobile stations (MS1, MS2) by combining a pre-coding vector of the first mobile station (MS1) with a pre-coding vector of the second mobile station (MS2).

**8.** Base station according to claim 6, wherein the selection unit (10) is adapted to select a first mobile station (MS1) and a second mobile' station (MS2) having a difference of the SINR larger than a threshold parameter.

**9.** Communications cell ($B_j$), comprising:

a base station (BS$_j$) according to claim 6,
a first mobile station (MS1) which is adapted, before recovering the first data signal (d$_1$$^{(j)}$) from the transmitted downstream signal, to remove the contribution of the second data signal (d$_2$$^{(j)}$) from the transmitted downstream signal, and,
a second mobile station (MS2) which is adapted to recover the second data signal (d$_2$$^{(j)}$) from the transmitted downstream signal treating the contribution of the first data signal (d$_1$$^{(j)}$) as noise.

**10.** Wireless communications network (1) comprising a communications cell (B$_j$) according to claim 9 and at least one further communications cell (B$_k$) according to claim 9.

**11.** Wireless communications network according to claim 10, wherein a base station (BS$_k$) of the further communications cell (B$_k$) comprises:

a selection unit (10') adapted for selecting a third mobile station (MS3) in a beam (B$_2$$^{(k)}$) of the further communications cell (B$_k$) also serving the second mobile station (MS2), the third mobile station (MS3) having higher SINR than the second mobile station (MS2),
a signal generation unit (11') adapted to generate a further downstream signal by combining the second data signal (d$_2$$^{(j)}$) for the second mobile station (MS2) with a third data signal for the third mobile station (MS3), and
a transmitting unit (N$_{Tx}$$^{(k)}$) for transmitting the further downstream signal to the second and third mobile stations (MS2, MS3), wherein
an open-loop or a closed-loop diversity scheme, preferably orthogonal block encoding, in particular space-frequency block encoding or space-time block encoding is used for transmitting the downstream signal (b$_1$$^{(j)}$) and the further downstream signal to the second mobile station (MS2).

**12.** Computer program product comprising code means adapted to perform all the steps of the method according to claim 1.

Fig. 1

Fig. 2

European Patent Office

**EUROPEAN SEARCH REPORT**

Application Number

EP 09 29 0308

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/133051 A (LG ELECTRONICS INC [KR]; WANG SHU [US]; YOON YOUNG CHEUL [US]; LEE SUK) 22 November 2007 (2007-11-22) * abstract * * paragraph [0029] - paragraph [0032] * * paragraph [0034] - paragraph [0039]; figures 3-5 * * paragraph [0042] - paragraph [0043] * * paragraph [0051] * * paragraph [0054] - paragraph [0057] * ----- | 1-12 | INV. H04B7/04 |
| A | PANASONIC: "Discussion on CQI Report Metric (SINR vs TBS)" 3GPP DRAFT; R1-074424, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20071002, 2 October 2007 (2007-10-02), XP050107936 * page 1 * ----- | 1,6 | |
| A | KLEMENS FREUDENTHALER ET AL: "Novel SINR-to-CQI Mapping Maximizing the Throughput in HSDPA" IEEE WIRELESS COMMUNICATIONS AND NETWORKING CONFERENCE, 2007, WCNC 2007, 11 - 15 MARCH 2007, HONG KONG, IEEE OPERATIONS CENTER, PISCATAWAY, NJ, 1 March 2007 (2007-03-01), pages 2233-2237, XP031097555 ISBN: 978-1-4244-0658-6 * abstract * ----- | 1,6 | TECHNICAL FIELDS SEARCHED (IPC) H04B H04W |

The present search report has been drawn up for all claims

| Place of search | Date of completion of the search | Examiner |
|---|---|---|
| Munich | 19 November 2009 | Martínez Martínez, V |

**ANNEX TO THE EUROPEAN SEARCH REPORT
ON EUROPEAN PATENT APPLICATION NO.**

EP 09 29 0308

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2009

| Patent document cited in search report | Publication date | Patent family member(s) | | Publication date |
|---|---|---|---|---|
| WO 2007133051 A | 22-11-2007 | EP | 2018787 A2 | 28-01-2009 |
| | | KR | 20080109812 A | 17-12-2008 |
| | | US | 2007270170 A1 | 22-11-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Optimum power allocation for the MIMO-BC zero-forcing precoder with per-antenna power constraints. **Boccardi, F. ; Huang, H.** Proceedings of Information Sciences and Systems. March 2006